# EUROPEAN PATENT APPLICATION

(11) **EP 0 581 741 A2**
(43) Date of publication of application: **02.02.1994**
(21) Application number: 93810538.4
(22) Date of filing: 27.07.1993
(51) Int. Cl.: A23L 1/308, C12F 3/06, A23L 1/10

(54) **Dietary fibre from barley spent grain and process for preparing the same**

(30) Priority: 29.07.1992 GB 9216135
(71) Applicant: SANDOZ NUTRITION LTD., CH-3001 Berne (CH)
(72) Inventor: Chambers, Marcus James, Watford, Hertfordshire WD2 6QQ (GB)
(74) Representative: Smolders, Walter

(57) **Abstract**

A process of preparing dietary fibre from barley spent grain is provided which process comprises
a) reducing the moisture content of barley spent grain to at least 10 % by weight moisture such that the moisture content reduction is achieved before oxidation gives a rancid product; and
b) reducing the particle size of the product of step a) till a product substantially free of needle shaped pieces of the grain husk is obtained.

## Description

The invention relates to a dietary fibre obtained from barley spent grain, its production and its use.

Barley is a major component in the production of beer and malt. For beer production ground malted barley is mixed and extracted by soaking in warm water. The aqueous phase, the so called "wort" or new beer, is separated from the malt grain residue for further processing to beer. The malt grain residue is recovered in the form of a product generally referred to as brewer's spent grain (BSG). The malt grain residue consist essentially of embryo tissues, water insoluble seed storage materials, such as water insoluble proteins and husks. BSG may contain other components, depending on the particular brewing process employed and the flavouring agents added. Examples of such components are residues of hop, corn, rice, yeast and/or a coagulum from wort following the boiling of wort and hop addition.

For barley and malt extract production the initial processing steps are essentially analogous to those employed in the brewing process except that in general, untreated barley grain will be used in addition to malted barley grain as starting materials. Both, the barley grain and the malted barley grain are ground, e.g. by wet milling, and the resulting grist extracted with hot water. The barley extraction is conveniently carried out in the presence of appropriate enzymes. Though it is not necessary to add enzymes for the extraction of the malted barley grain, it may be advantageous to do this to optimise the yield. (The same applies for the brewing process referred to hereinabove). The fermentation liquor and remaining grist or spent grain are then separated, e.g. by filtering in a false bottom vessel. The liquor is then concentrated to give malt and barley extract. The spent grain residue from the brewing process or malt production is usually employed as animal feed. The nutritional quality of the spent grain resulting from malt production is, in general, better than that resulting from the brewing process, due to the fact that the extraction for brewing purposes is usually more extensive, for economical reasons.

Since for barley and malt extract production untreated barley grain may be employed as starting material in addition to malted barley grain, the spent grain resulting from such malt production may be 100 % spent malted barley grain or a mixture of spent malted barley grain with spent grains from untreated barley. A typical mixture is 25 % by weight of spent malted barley grain with 75 % by weight spent grain from untreated barley. This weight ratio is typical because the bulk of malt products is obtained employing the starting materials (grains) in said 25:75 weight ratio. Other weight ratios of spent malted barley grain to untreated barley spent grain can of course be obtained and the weight ratios are of no relevance for the invention, as explained hereinafter.

The term barley spent grain as used hereinafter with respect to the invention, relates to the malted barley spent grain residue, optionally in admixture with untreated barley spent grain residue, as recovered from beer or malt production in crude form or after purification of the crude form. The crude form may, as explained hereinbefore, contain additional components typical for the production process employed. Such crude form may be purified, by washing out or otherwise separating part or substantially all of said additional compounds from the malted barley spent grain residue and the untreated barley spent grain residue or mixture thereof with the malted spent grain residue where applicable.

DE-OS 36 44 600 relates to a crude product obtained from BSG containing 80 to 90 % by weight of fibre material and less than 5 % by weight of fat and lipids. The product has a reduced fat content to improve its storage stability.

DE-OS 37 04 651 relates to a process of manufacturing a fraction of BSG rich in fibre material and with low lipid content. It is stated in the letter DE-OS that it is necessary to reduce the lipid content of BSG to obtain a nutritionally valuable and storable product.

The prior art references accordingly suggest that it is necessary to reduce the fat or lipid content of BSG to obtain a dietary fibre product with acceptable storage stability.

It has now been found that it is possible to obtain a high fibre food ingredient suitable for human consumption from barley spent grain by a simple process involving essentially only a drying and particle size reduction step, provided the drying step is achieved within a period of time before which oxidation of the barley spent grain to a rancid product occurs.

Such process has accordingly the advantage that it does no longer require reduction of the lipid content or fragmentation or other working up step of barley spent grain believed necessary to obtain a nutritionally valuable and storable dietary fibre product.

The invention therefore provides a process of preparing dietary fibre from barley spent grain which process comprises
a) reducing the moisture content of barley spent grain to at least 10 % moisture such that the moisture reduction is achieved before oxidation gives a rancid product; and
b) reducing the particle size of the product of step a) till a product substantially free of needle shaped pieces of the grain husk is obtained.

The thus obtained product in dry form or after re-wetting, has a long shelf life, i.e. it can be stored over a longer period of time and is substantially insensitive to oxidation by air. A 10 % weight/volume solution in water of such product typically has a pH above 5.

The invention accordingly provides a dietary fibre from barley spent grain characterised in that it has a moisture content of 10 % by weight or less, is substantially free of needle shaped pieces of the grain husk that would make the material unsuitable for human consumption and of which a 10 % weight/volume solution in water has a pH above 5.

The process of the invention can be carried out in a manner known per se for drying and particle size reduction of barley spent grain. It should be noted that barley spent grain from malt extraction is obtained in a wet state; its water content is, typically about 75 % percent by weight.

Therefore, the drying step will conveniently be carried out in 2 phases, involving an initial mechanical dewatering phase to reduce the water content followed by a drying phase to further reduce the water content to the desired level.

The mechanical dewatering may for example be carried out with a centrifuge or screw press. In view of relatively high maintenance cost of centrifuges, dewatering with the aid of a screw press is preferred.

The water content of the product to be obtained after the mechanical dewatering phase is not critical and is essentially dependent on practical and economical considerations which may in turn be dependent on the equipment employed. Typically the equipment and/or conditions of the dewatering phase will be selected such that a product having a water content of 40 to 70 %, particularly 50 to 70 % e.g. 60 % is obtained.

The thus dewatered barley spent grain will be submitted to a drying process. In order to avoid oxidation of the product, the drying process will conveniently be started within 3, preferably within 2 hours, more preferably within 1 hour of its exit from the brewing or malt extract process, resp. the drying process should be achieved within 4 hours, preferably within 3 hours, more preferably within 2 hours from the exit of barley spent grain from the brewing or malt extract process.

The drying phase may be carried out in a manner known per se. Suitable equipment for the drying phase are for example a cylindrical steam drier, a rotary drum drier, a vacuum drier, fluidized bed drier and the like.

For steam drying the dewatered product is for example treated in the pressurised steam atmosphere drier, rotary drum steam drier or flash drier with heated steam.

Where the dewatered product is dried in a pressurised steam atmosphere drier, the dewatered solids are fed into a flow of pressurised superheated steam. The steam and suspended material flow through the tubes of heat exchangers moisture is vapourised to give dried spent grain with a moisture content of 10 % or less.

Typically the drying will be carried out using superheated steam at a temperature of 100 to 200°C e.g., 180°C at the inlet of the drying equipment and 120°C at the outlet of the drying equipment.

Steam drying technology and equipment suitable for cylindrical steam drying according to the invention in a closed system are well known in the art.

The moisture content of the product according to process step a) is preferably not above 8 % and is more preferably 6 % or lower. The lower limit of the moisture content may vary, since it is essentially dependent on technical and economical factors. With conventional equipment it is not worthwhile to try and obtain a moisture content of less than 1 %, even though in principle, the product may be essentially dry. Moisture contents of 2.5 % can however be obtained without undue investment in equipment and time.

The size reduction according to step b) of the process of the invention, may be carried out employing any method or equipments allowing a size reduction of the product according to step a) to give a product substantially free of needle shaped pieces of the grain husk that would render the material unsuitable for human consumption, without burning or otherwise impairing the quality of the barley spent grain based product.

Such methods or equipments are known to the persons skilled in the art. Typical equipments suitable for the desired size reduction include commercially available milling apparatus, e.g. a classifier mill, blast mill or turbo mill. Satisfactory results are for example obtained employing a mill having a rotation velocity of ca. 10.000 rpm.

Typically the equipment should allow obtaining a fine and substantially even product having a particle size with 99 % by weight of the particles less than 355 microns, preferably less than 200 microns. According to a preferred method of the invention, the dried barley spent grain are micronized such that at least 80 % , more preferably 90 %, particularly 95 % by weight of the particles have a size of less than 150 microns.

The product according to the invention is easy to handle, has excellent organoleptic properties, a light brown colour, good water binding qualities, a long shelf life and an excellent nutritional value.

The drying conditions of Step a) of the process of the invention are preferably selected such that a 10 % weight/volume solution in water has a pH of 5.5 or more, more preferably 5.9 or more.

The dietary fibre product according to the invention has valuable nutritional and pharmacological properties. It increases the stool weight and relieves symptoms of constipation. It is a good source of iron. It has a relatively low content of phytic acid which is known to bind iron and could inhibit mineral absorption. It has favourable effects on the turnover of cholesterol in the bile salts in the intestine by making them unavailable for reabsorbtion and thereby lowers the total cholesterol concentration in blood including that of the LDL-fraction. It may have cancer-protective effects, especially with respect to colon cancer as well as other pharmacological properties as reported in literature.

The dietary fibre product of the invention is therefore suitable for use in food, clinical nutrition and pharmaceuticals. In general, a daily supply of 20 to 30 g of dietary fibre for an adult person will be sufficient to attain the desired effect.

In the food industry, the product of the invention may for example be employed as an adjuvant for the production of baked products such as crispbread, softbread including fibre-rich toastbread, fibre-rich biscuits, crackers of extruded cereal breakfast products, of food-drinks, sausages, sausage rolls, pork pies and the like.

In view of its favourable organoleptic and other advantageous properties, it can for example be used for the preparation of bread, by replacing a substantial part by weight of the flour to be employed by the dietary fibre according to the invention, without adversely affecting the bread flavour. This has been confirmed by tests with bread in which up to 20 % by weight of the flour was replaced by the dietary fibre of the invention and which still result in a product having an overall good flavour. The colour and dough raising is changed. The bread colour is better than the colour achieved with the fibre types, especially pea fibre. Raising can be accommodated with extra vital wheat gluten.

The following Examples illustrate the invention:

### EXAMPLE 1

Wet malted barley spent grain is dried employing a vacuum chamber drier with steam heated plattens. Over two hours under a vacuum of 34mBar with a steam temperature of 120°C the product achieves a moisture content of 5 % by weight.

The dewatering step and drying process are achieved within 3 hours from the exit of the spent grain from the malt extract production process.

The thus obtained dried product is milled employing a turbo mill with the roto travelling at around 10 000 rpm to give an even product having a particle size all less than 400 microns.

The resulting product contains 51.9 % by weight of dietary fibre, 1.7 % by weight being soluble and 50.2 % being insoluble.

A 10 % weight per volume solution of the thus obtained product has a pH of 5,9.

### EXAMPLE 2

Wet malted barley and barley spent grains is dewatered employing a belt wire press (V-belt press) to give a pressed cake containing 67 % water. This pressed cake is then dried in a single tube pressurised superheated steam drier, steam temperature varying from 180°C to 120°C along the length of the drier. The resultant product moisture was an average of 3.0 %.

The dewatering step and drying process are achieved within 3 hours from the exit of the spent grain from the malt extract production process.

The thus obtained dried product is milled employing a classifier mill to give an even product with 99 % less than 200 µm.

The resulting product contains 51.9 % by weight of dietary fibre, 1.7 % by weight being soluble and 50.2 % being insoluble.

A 10 % weight per volume solution of the thus obtained product in water has a pH of 5.9.

### EXAMPLE 3

A mixture of 25 % by weight of malted barley spent grain residue and 75 % by weight of untreated barley spent grain residue both residues resulting from malt extract production is dried and micronized analogous to the process according to Example 1.
The resulting light brown, free flowing product has the following particle size distribution.

| | | |
|---|---|---|
| Moisture | | 5 |
| Protein | | 20 |
| Fat | | 9 |
| of which | | |
| Saturated | | 6 |
| Unsaturated | | 3 |
| Ash | | 3 |
| Fibre (by modified Englyst method) | | 50 |
| of which | | |
| insoluble | 48 | |
| soluble | 2 | |
| Carbohydrate (by difference) | | 13 |

### Physical Analysis

pH > 5.5
(10 % solution, weight by volume)
bulk density kg/m³
loose 320
tapped 380
Particle size distribution
passing 355 micron 99.5 %
passing 125 micron 95 %
passing 106 micron 50 %.
- Shell life:: an unopened sack under normal conditions has a shelf life of at least 12 months (as established by determination of organoleptic properties, pH and the moisture content)

### EXAMPLE 4

A mixture of 25 % by weight of malted barley spent grain residue and 75 % by weight of untreated barley spent grain residue both residues resulting from malt extract production is dried and micronized analogous to the process according to Example 2.

The resulting light brown, free flowing product has the following particle size distribution:
passing 200 micron: 99 %
passing 150 micron: 95 %
passing 60 micron: 60 %.

### Examples of Bread Dough Recipes

| **Ingredient** | **Recipe 1** | **Recipe 2** |
|---|---|---|
| Wheat Flour | 2045 g | 1943 g |
| Salt (Sodium Chloride) | 42 g | 42 g |
| Vegetable Fat | 28 g | 28 g |
| Bakery Improver (Soya flour and ascorbic acid) | 21 g | 21 g |
| Yeast | 57 g | 57 g |
| Wander Fibre | 205 g | 307 g |
| Water | 1136 g | 1136 g |

## Claims

1. Process of preparing dietary fibre from barley spent grain which process comprises
a) reducing the moisture content of barley spent grain to at least 10 % by weight moisture such that the moisture content reduction is achieved before oxidation gives a rancid product; and
b) reducing the particle size of the product of step a) till a product substantially free of needle shaped pieces of the grain husk is obtained.

2. The process of Claim 1, wherein the moisture content is reduced to 8 % by weight or less.

3. The process of Claim 2, wherein the moisture content is reduced to 6 % by weight or less.

4. The process of Claims 1 to 3, wherein the drying step is achieved within 4 hours from the exit of the barley spent grain from the beer or malt production.

5. The process of Claim 4, wherein the drying step is achieved within 3 hours from the exit of the barley spent grain from the beer or malt production.

6. The process of Claim 5, wherein the drying step is achieved within 2 hours from the exit of the exit of the barley spent grain from the beer or malt production.

7. The process of Claims 1 to 6, wherein the drying process is achieved within a time selected such that a 10 % weight by volume solution of the product in water has a pH of above 5.0.

8. The process of Claim 7, wherein the drying process is achieved within a time selected such that a 10 % weight by volume solution of the product in water has a pH of 5.5 or more.

9. The process of Claims 1 to 8, wherein the conditions of the particle size reduction are selected such that a substantially even product with 99.5 % by weight of the product having a particle size of less than 355 micron is obtained.

10. The process of Claims 1 to 8, wherein the conditions of the particle size reduction are selected such that a substantially even product with 99 % by weight of the product having a particle size of less than 200 micron is obtained.

11. The process of Claim 9, wherein the conditions of the particle size reduction are selected such that at least 95 % by weight of the particles have a particle size of less than 125 micron.

12. The process of Claim 10, wherein the conditions of the particle size reduction are selected such that at least 95 % by weight of the particles have a particle size of less than 150 micron.

13. Dietary fibre from barley spent grain characterised in that it has a moisture content of 10 % by weight or less, is substantially free of needle shaped pieces of the grain husk that would make the material unsuitable for human consumption and of which a 10 % weight per volume solution in water has a pH above 5.

14. The product of Claim 13, of which a 10 % weight per volume solution in water has a pH of 5.5 or more.

15. The product of Claims 14 and 15 which is substantially even and of which 99.5 % by weight has a particle size of less than 355 micron.

16. The product of Claims 14 and 16 which is substantially even and of which 99 % by weight has a particle size of less than 200 micron.
